# EUROPÄISCHE PATENTSCHRIFT

(11) **EP 2 855 025 B1**
(45) Veröffentlichungstag und Bekanntmachung des Hinweises auf die Patenterteilung: **25.09.2019**
(21) Anmeldenummer: 13723155.1
(22) Anmeldetag: 16.05.2013
(51) Int. Cl.: B04B 5/12, B04B 7/12, B01D 45/14, F01M 13/04

(54) **ABSCHEIDER UND VERFAHREN ZUM ABSCHEIDEN VON FLÜSSIGKEITSTRÖPFCHEN AUS EINEM AEROSOL**
SEPARATOR AND METHOD FOR SEPARATING LIQUID DROPLETS FROM AN AEROSOL
SÉPARATEUR ET PROCÉDÉ DE SÉPARATION DE GOUTTELETTES DE LIQUIDE D'AVEC UN AÉROSOL

(30) Priorität: 29.05.2012 DE 102012104598
(43) Veröffentlichungstag der Anmeldung: 08.04.2015
(73) Patentinhaber: ElringKlinger AG, 72581 Dettingen (DE)
(72) Erfinder: GORBACH, Gabriele, 72766 Reutlingen (DE); COOLENS, Holger, 72070 Tübingen (DE); HABIL PIESCHE, Manfred, 70178 Stuttgart (DE); JUNKER, Malte, 81539 München (DE)
(74) Vertreter: Hoeger, Stellrecht & Partner Patentanwälte mbB
(86) Internationale Anmeldenummer: PCT/EP2013/060207
(87) Internationale Veröffentlichungsnummer: WO 2013/178481

(56) Entgegenhaltungen:
- WO-A1-01/36103
- WO-A1-2005/046879
- DE-A1- 1 417 680
- DE-C- 158 849

## Beschreibung

Die Erfindung betrifft einen Abscheider zum Abscheiden von Flüssigkeitströpfchen aus einem Aerosol, insbesondere Ölabscheider für die Kurbelgehäuse-Entlüftungsgase eines Hubkolben-Verbrennungsmotors, mit einem in einem stationären Gehäuse angeordneten, um eine Rotorachse drehantreibbaren Rotor, der mehrere mit der Rotorachse konzentrische, parallel zueinander angeordnete Scheiben aufweist, welche zusammen einen um die Rotorachse drehantreibbaren Scheibenstapel bilden und in Richtung der Rotorachse in insbesondere gleich großen Abständen voneinander angeordnet sind, mit einem Gasströmungspfad zwischen einem Rohgaseinlass des Abscheiders für ein abzuscheidende Flüssigkeitströpfchen mitführendes Gas und einem Reingasauslass des Abscheiders für das von den Flüssigkeitströpfchen mindestens weitgehend befreite Gas, mit einem Flüssigkeitsauslass zum Abführen abgeschiedener Flüssigkeit aus dem Gehäuse sowie mit einem Ringraum zwischen dem Umfang des Rotors und einer diesen umschließenden Umfangswand des Gehäuses, wobei der Flüssigkeitsauslass mit dem Ringraum kommuniziert und einander benachbarte Scheiben zwischen sich jeweils einen mit der Rotorachse konzentrischen, vom Gas zu durchströmenden Zwischenraum bilden, dessen radial äußerer Bereich in den Ringraum mündet, und wobei von den Durchlässen Rohgaseinlass und Reingasauslass der eine mit dem Ringraum und der andere mit radial inneren Bereichen der Zwischenräume kommuniziert.

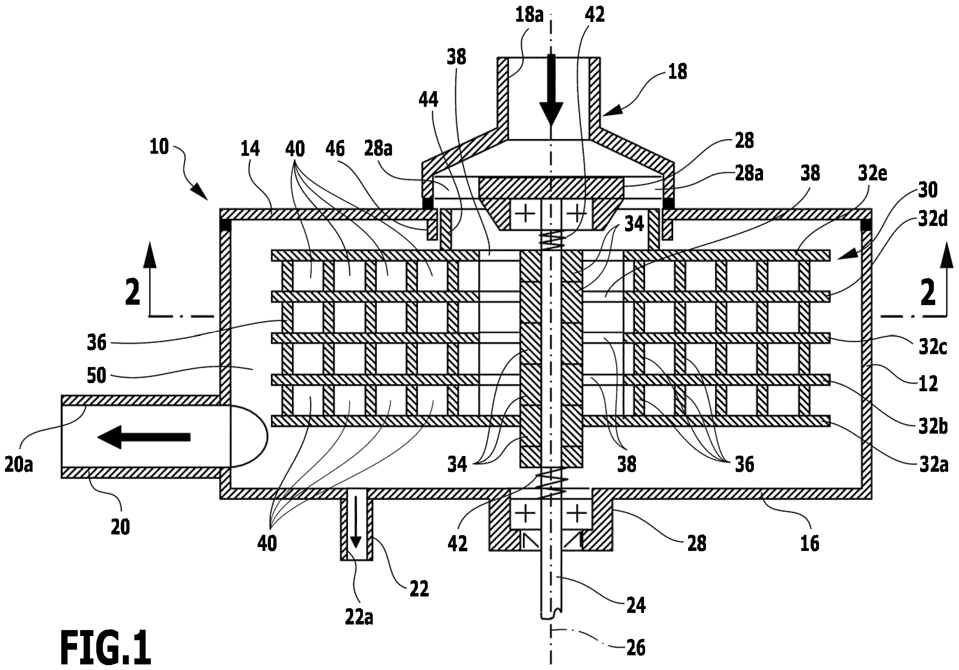

Ein solcher Abscheider, dessen Rotor-Scheibenstapel von konischen, nämlich kegelstumpfförmigen Scheiben gebildet wird, ist aus der WO 01/36103 A bekannt. Wie die Fig. 1 dieses Dokuments zeigt, sind die kegelstumpfförmigen Scheiben entlang der Rotorachse in Abständen voneinander alle so angeordnet, dass sich ihr Konuswinkel in der gleichen axialen Richtung öffnet und einander benachbarte Scheiben in axialer Richtung so ineinander eingreifen, dass, in radialer Richtung gesehen, sich die kegelstumpfförmigen Bereiche einander benachbarter Scheiben weitgehendst überlappen. Wie sich aus Fig. 1 ergibt, beruht der Abscheideeffekt dieses bekannten Abscheiders auf folgendem Prinzip: Bei sich drehendem Rotor werden vom zu reinigenden Gas mitgeführte Flüssigkeitströpfchen aufgrund der auf diese einwirkenden Zentrifugalkräfte gegen die inneren Wandflächen der konischen Scheiben geschleudert, wenn das zu reinigende Gas die Zwischenräume zwischen den einander benachbarten Scheiben durchströmt; dadurch werden Flüssigkeitströpfchen an diesen inneren Wandflächen abgeschieden und bilden dort Flüssigkeitsfilme, die aufgrund der Zentrifugalkräfte an den Außenumfang des Rotors transportiert werden, worauf die abgeschiedene Flüssigkeit radial nach außen vom Rotor abgeschleudert wird und dabei zumindest teilweise gegen die Umfangswand des Gehäuses prallt. Vom Ringraum zwischen dem Rotor und dem Gehäuse sowie dessen Umfangswand gelangt die abgeschiedene Flüssigkeit dann aufgrund der Schwerkraft in den unteren Bereich des Gehäuses und verlässt Letzteres über dessen Flüssigkeitsauslass.

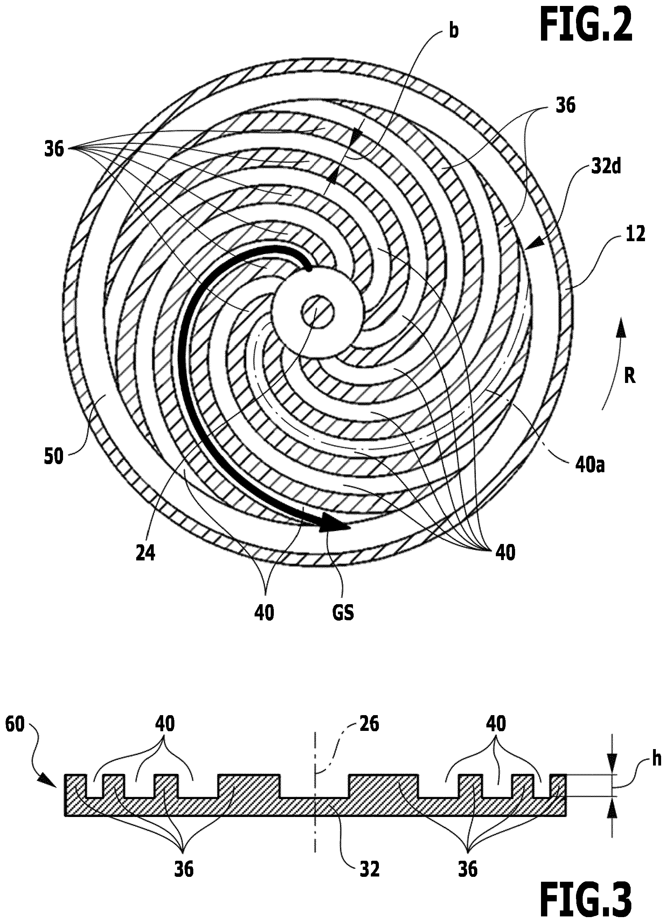

Wie sich aus dem in Fig. 2 dargestellten Schnitt nach der Linie 2-2 in Fig. 1 ergibt, sind auf den inneren (das heißt gemäß Fig. 1 oberen) Wandflächen der konusförmigen Scheiben Rippen angeordnet, welche in Richtung der Rotorachse gesehen sichelförmig gekrümmt sind und deren Zweck und Wirkungsweise sich aus den Zeilen 22 bis 26 der S. 12 der WO 01/36103 A ergibt: Flüssigkeitströpfchen, die in der vorstehend beschriebenen Weise an den konischen inneren Wandflächen der Scheiben abgeschieden wurden, werden durch diese Rippen erfasst und entlang dieser Rippen zum Außenumfang der Scheiben geleitet, wobei die bereits abgeschiedenen Flüssigkeitströpfchen zu größeren Tropfen bzw. Flüssigkeitsmengen koaleszieren, welche dann vom Rotor abgeschleudert werden. Für von dem die Zwischenräume zwischen einander benachbarten Scheiben durchströmenden Gas gebildete Teilgasströme wirken die Rippen als Strömungsleitelemente, und in Richtung der Rotorachse gesehen sind die zwischen den Rippen verlaufenden Strömungspfade für die Teilgasströme infolge dessen gekrümmt gestaltet (sh. S. 11, Zeilen 19 bis 21). Nach dem Grundprinzip dieses bekannten Abscheiders werden die abzusondernden Flüssigkeitströpfchen jedoch ausschließlich oder zumindest überwiegend an den konischen Innenflächen der Scheiben abgeschieden und gelangen erst dann an die Rippen, an denen sie sich sammeln und zu größeren Tropfen bzw. Flüssigkeitsmengen koaleszieren (sh. insbesondere Anspruch 1, nämlich S. 16, Zeilen 15 bis 17 und 26 bis 30, sowie S. 5, Zeilen 2 bis 5 und 7 bis 11).

Für die Reinigung von sogenannten Blow-by-Gasen, wie sie bei der Kurbelgehäuseentlüftung von Hubkolben-Verbrennungsmotoren anfallen, werden im Nutzfahrzeugbereich angetriebene Abscheider, wie beispielsweise Abscheider der eingangs definierten Art, eingesetzt, während für demgegenüber kleinere Motoren, wie sie Personenwagen aufweisen, passive Abscheider verwendet werden, neuerdings insbesondere Abscheider, deren Abscheidesystem von einer Kombination aus einem Impaktor (Prallplatte oder dergleichen) und einem Faservlies gebildet wird. Der von solchen passiven Abscheidern im Gasstrom der Blow-by-Gase hervorgerufene verhältnismäßig große Druckverlust kann jedoch nachteilig sein, und der Abscheidegrad solcher passiver Systeme ist im Bereich feinster Tröpfchen mit einer Tröpfchengröße von ca. 0,7 µm oder kleiner verbesserungsbedürftig; eine diesbezügliche Verbesserung erfordert bislang den Einsatz angetriebener Abscheider, insbesondere von Abscheidern der Art, wie sie sich aus der WO 01/36103 A ergeben. Diese bekannten Abscheider weisen aber, bezogen auf die Anzahl der für den gewünschten Abscheidegrad erforderlichen Scheiben, aufgrund der Konusform der Scheiben eine verhältnismäßig große axiale Baulänge auf, was vor allem bei Personenwagen als nachteilig empfunden wird, und eine Verkleinerung der axialen Baulänge durch die Reduzierung der Zahl der Scheiben wirkt sich negativ auf die Abtrennleistung solcher Abscheider aus. Außerdem reagieren bekannte Abscheider, wie sie sich aus der WO 01/36103 A ergeben, sehr empfindlich auf eine zeitliche Veränderung der Größe des Volumenstroms der zu reinigenden Gase.

Der Erfindung lag deshalb die Aufgabe zugrunde, einen verbesserten Abscheider der eingangs definierten Art vorzuschlagen, dessen Abtrennleistung bei gleicher Baugröße und unter gleichen Betriebsbedingungen grundsätzlich besser ist als diejenige eines Abscheiders mit konischen Scheiben, und erfindungsgemäß lässt sich diese Aufgabe durch einen Abscheider der eingangs definierten Art lösen, welcher sich dadurch auszeichnet, dass die Scheiben flache Scheibenkörper aufweisen, welche sich in zur Rotorachse senkrechten Ebenen erstrecken, dass zumindest in mehreren der Zwischenräume zwischen zwei einander benachbarten Scheibenkörpern jeweils mehrere einander benachbarte und durch das zu reinigende Gas durchströmbare Kanäle vorgesehen sind, dass jeder Kanal sich zumindest im Wesentlichen von einem ersten radialen Bereich bis zu einem zweiten radialen Bereich des Zwischenraums erstreckt, wobei die beiden Bereiche im radialen Abstand voneinander angeordnet sind, dass in einer Ansicht in Richtung der Rotorachse jeder Kanal gekrümmt ist, und dass von die Kanalbreite beidseitig begrenzenden Kanalwandflächen die radial äußere eine Prall- und Abscheidefläche für die vom zu reinigenden Gas mitgeführten Flüssigkeitströpfchen bildet.

Die Erfindung betrifft auch ein Verfahren zum Abscheiden von Flüssigkeitströpfchen aus einem Aerosol, insbesondere zur Abscheidung von Öltröpfchen aus Kurbelgehäuse-Entlüftungsgasen eines Hubkolben-Verbrennungsmotors, mittels eines Abscheiders mit einem in einem stationären Gehäuse angeordneten, um eine Rotorachse drehantreibbaren Rotor, der mehrere mit der Rotorachse konzentrische, parallel zueinander und axial voneinander beabstandet angeordnete Scheiben aufweist, die zwischen sich jeweils einen mit der Rotorachse konzentrischen Zwischenraum bilden, und dieses Verfahren ist erfindungsgemäß so gestaltet, dass mehrere von dem zu reinigenden Gas gebildete Teilgasströme längs sich zumindest im Wesentlichen von einem radial inneren bis zu einem radial äußeren Bereich eines Zwischenraums erstreckenden Strömungspfaden simultan zwischen flachen, zur Rotorachse senkrechten Scheibenkörpern der Scheiben durch die Zwischenräume geleitet werden, wobei in einer Ansicht einer Scheibe in Richtung der Rotorachse diese Strömungspfade einander benachbart und gleichsinnig derart gekrümmt sind, dass bei rotierendem Rotor von den Teilgasströmen mitgeführte Flüssigkeitströpfchen aufgrund der auf Letztere einwirkenden Zentrifugal- und Corioliskräfte zumindest überwiegend an Prallflächen abgeschieden werden, welche die Strömungspfade in radialer Richtung nach außen begrenzen.

Durch die Erfindung lassen sich die folgenden Vorteile erreichen: Mit einem erfindungsgemäßen Abscheider mit erfindungsgemäßer Geometrie der Kanäle lässt sich bei gleichem, zur Verfügung stehendem axialem Bauraum und unter gleichen Betriebsbedingungen eine deutlich höhere Abtrennleistung erreichen als mit dem sich aus der WO 01/36103 A ergebenden Abscheider, bei dem aufgrund der konischen Form der Scheiben weniger Bauraum zur Unterbringung von der Abscheidung von Flüssigkeitströpfchen dienenden Flächen zur Verfügung steht, das heißt in anderen Worten, dass bei einem erfindungsgemäßen Abscheider die für die Tröpfchenabscheidung nutzbare Fläche bei gleichem axialem Bauraum größer ist als bei einem Abscheider mit konischen Scheiben.

Ferner lässt sich bei einem erfindungsgemäßen Abscheider dessen Abtrennleistung durch Veränderungen der Kanalgeometrie, insbesondere der Krümmung der Kanäle, flexibel an unterschiedliche Anforderungen anpassen, und wie sich aus dem Folgenden noch ergeben wird, erlaubt es das erfindungsgemäße Grundkonzept des Abscheiders, durch die Gestaltung und Anzahl der Kanäle nicht nur die Abtrennleistung für feine und feinste Flüssigkeitströpfchen zu erhöhen, sondern auch die Auswirkungen zeitlicher Veränderungen des Volumenstroms des zu reinigenden Gases auf die Abtrennleistung des Abscheiders zu verringern - Letzteres durch eine spezielle Kanalgeometrie, die dazu führt, dass zusätzlich zu den auf die Flüssigkeitströpfchen einwirkenden Zentrifugalkräften auch Corioliskräfte auf die abzuscheidenden Flüssigkeitströpfchen in dem Sinne einwirken, dass Letztere zumindest überwiegend und weitgehendst an Prallflächen abgeschieden werden, welche die Kanäle bzw. die Strömungspfade für die Teilgasströme in radialer Richtung nach außen begrenzen.

Zu den eingangs und bei der Charakterisierung der Erfindung verwendeten Begriffen ist Folgendes zu bemerken:
Wenn eingangs davon die Rede war, dass der Flüssigkeitsauslass mit dem Ringraum und von den Durchlässen Rohgaseinlass und Reingasauslass der eine mit dem Ringraum und der andere mit radial inneren Bereichen der Zwischenräume kommuniziert, so ist hierunter zu verstehen, dass im Ringraum anfallende abgeschiedene Flüssigkeit über den Flüssigkeitsauslass aus dem Abscheider abgezogen werden kann, das zu reinigende Gas vom Rohgaseinlass über irgendwelche Strömungspfade zu den radial inneren Bereichen der Zwischenräume geleitet oder in den Ringraum eingeleitet wird, und dass das gereinigte Gas von den radial inneren Bereichen der Zwischenräume über irgendwelche Strömungspfade zum Reingasauslass geführt wird oder vom Ringraum über den Reingasauslass aus dem Abscheider abgeleitet wird.

Die als flach charakterisierten Scheibenkörper müssen nicht ein- oder beidseitig absolut eben sein, auch wenn man von den für die Bildung der Kanäle erforderlichen Mitteln absieht.

Bei bevorzugten Ausführungsformen des erfindungsgemäßen Abscheiders erstrecken sich alle Kanäle zumindest im Wesentlichen von einem radial inneren bis zu einem radial äußeren Bereich eines diese Kanäle aufnehmenden Zwischenraums. Die in einem solchen Zwischenraum vorgesehenen erfindungsgemäßen Kanäle müssen sich jedoch nicht von den Zentren der den Zwischenraum begrenzenden Scheiben bis zu deren Umfangsrändern erstrecken, sondern die Kanäle können auch schon in einem radialen Abstand von den Scheibenzentren bzw. vom Innenumfang der Scheiben und/oder im Abstand vom Außenumfang des Rotors enden.

Bei bevorzugten Ausführungsformen des erfindungsgemäßen Abscheiders ist jeder der Kanäle stetig gekrümmt, was bedeutet, dass in Richtung der Rotorachse gesehen ein solcher Kanal keinen Längsabschnitt aufweist, welcher zum Beispiel gerade verläuft oder abgeknickt ist, denn dadurch würde die Abscheideeffizienz unnötig verschlechtert werden.

Bei wegen ihrer Abtrennleistung zu bevorzugenden Ausführungsformen des erfindungsgemäßen Abscheiders ist jeder Kanal, ausgehend von seinem radial inneren Ende, in einer Umfangsrichtung des Rotors abgebogen und derart gekrümmt, dass mit zunehmendem radialem Abstand von der Rotorachse die Richtung des Kanals mit dieser Umfangsrichtung des Rotors einen immer kleineren Winkel bildet. Dabei ist unter dieser Umfangsrichtung des Rotors insbesondere dessen Drehrichtung zu verstehen, auch wenn grundsätzlich die Rotor-Drehrichtung entgegengesetzt sein kann, was jedoch unter sonst gleichen Betriebsbedingungen eine geringere Abtrennleistung zur Folge hat.

Eine hinsichtlich der Abtrennleistung optimale Ausnutzung des für den erfindungsgemäßen Abscheider zur Verfügung stehenden Bauraums wird mit bevorzugten Ausführungsformen erreicht, bei denen in einer Ansicht in Richtung der Rotorachse jeder Kanal durch zwei Kanalwände bzw. -wandflächen begrenzt wird und eine zwischen Letzteren verlaufende Mittellinie des Kanals zumindest annähernd mindestens einen Abschnitt einer Spirale (z.B. einer logarithmischen Spirale) oder eines Kreisbogens bildet. Bei bevorzugten Spiralen handelt es sich um eine Archimedische Spirale oder eine Evolvente, wobei die Evolvente zu optimalen Ergebnissen hinsichtlich der Abtrennleistung des erfindungsgemäßen Abscheiders führt; in diesem Zusammenhang ist zu beachten, dass bei Kanälen mit einem ungefähr evolventenförmigen Verlauf sich in einem Rotor vorgegebenen Außendurchmessers in einem Zwischenraum zwischen zwei einander benachbarten Scheiben mehr Kanäle als bei einer anderen Kanalgeometrie unterbringen lassen, was sich auf die Abtrennleistung des Abscheiders positiv auswirkt.

Im Hinblick auf eine anzustrebende möglichst hohe Abtrennleistung des erfindungsgemäßen Abscheiders ist es von Vorteil, wenn in einer Ansicht in Richtung der Rotorachse jeder Kanal entlang des Kanals eine zumindest nahezu konstante Breite aufweist. Dies bedeutet aber nicht, dass die Kanalbreite exakt konstant sein muss; vielmehr kann die Kanalbreite zum Beispiel in einem radial weiter innen liegenden Kanalbereich etwas geringer sein als in einem radial weiter außen liegenden Kanalbereich, und eine konstante Kanalbreite wird zwar angestrebt, diesem Bestreben setzen jedoch Fertigungstoleranzen ebenso Grenzen wie das örtlich gegebenenfalls unterschiedliche Schrumpfen einer als Kunststoff-Spritzgussteil hergestellten erfindungsgemäßen Scheibe. Entlang eines Kanals sollte dessen Breite jedoch um höchstens ¼ der mittleren Kanalbreite schwanken.

Die Abtrennleistung eines erfindungsgemäßen Abscheiders ist umso besser, je geringer die Kanalbreite ist, und eine geringere Kanalbreite ermöglicht es auch, im Zwischenraum zwischen einander benachbarten Scheiben eine größere Anzahl von Kanälen unterzubringen, was insbesondere für einen evolventenförmigen Verlauf der Kanäle gilt. Durch eine höhere Anzahl von Kanälen lässt sich auch der durch den Abscheider verursachte Druckverlust in der Gasströmung reduzieren. Bei einem erfindungsgemäßen Abscheider sollte die Kanalbreite (in Richtung der Rotorachse gesehen) höchstens 15 mm betragen, und bei bevorzugten Ausführungsformen beträgt die Kanalbreite höchstens 4 mm und vorzugsweise höchstens 2 mm, und noch günstiger sind Kanalbreiten von ca. 1,0 bis ca. 1,5 mm. Die Fertigungstechnik setzt der Reduzierung der Kanalbreite jedoch Grenzen, weshalb die Kanalbreite mindestens ca. 0,1 mm, vorzugsweise mindestens ca. 0,5 mm und insbesondere mindestens ca. 1 mm betragen sollte. Verhältnismäßig große Kanalbreiten von beispielsweise 5 bis 15 mm sind zwar grundsätzlich möglich, jedoch verliert ein erfindungsgemäßer Abscheider bezüglich seiner Abtrennleistung und seinem Abscheidevermögen für feine und feinste Flüssigkeitströpfchen seine Überlegenheit gegenüber passiven Abscheidesystemen, wie sie vorstehend beschrieben wurden, immer mehr, wenn die Kanalbreite über einen Wert von 4 mm hinaus vergrößert wird.

Empfohlen werden Ausführungsformen des erfindungsgemäßen Abscheiders, bei denen in einem Zwischenraum die in Richtung der Rotorachse gemessene Höhe der Kanäle konstant und für alle zwischen zwei einander benachbarten Scheibenkörpern vorgesehenen Kanäle gleich groß ist. Bei bevorzugten Ausführungsformen des erfindungsgemäßen Abscheiders ist die Höhe aller in allen Zwischenräumen vorgesehenen Kanäle gleich groß, womit man dem Ziel näher kommt, das zu reinigende Gas möglichst gleichmäßig auf alle Kanäle zu verteilen. Um zu verhindern, dass das zu reinigende Gas die Kanäle in ungefähr radialer Richtung nennenswert oder überhaupt überströmt, sollte die in Richtung der Rotorachse gemessene Höhe der zwischen zwei einander benachbarten Scheibenkörpern vorgesehenen, die Kanäle begrenzenden Kanalwandflächen bzw. Kanalwände mindestens nahezu gleich oder besser tatsächlich gleich dem axialen Abstand dieser Scheibenkörper voneinander sein, um auf diese Weise die Abscheideeffizienz des Abscheiders zu optimieren.

Wie sich aus dem Vorstehenden ergibt, empfehlen sich Ausführungsformen, bei denen jeder Kanal durch zwei zumindest im Wesentlichen parallel zu einander verlaufende Kanalwände begrenzt wird.

Aus dem Abscheideprinzip des erfindungsgemäßen Abscheiders folgt, dass es für die Abtrennleistung besonders günstig ist, wenn die Kanalwände quer und insbesondere zumindest nahezu senkrecht zu einer von einem Scheibenkörper definierten Ebene verlaufen. Unter einem Verlauf quer zu einer solchen Ebene ist zu verstehen, dass eine Kanalwand mit der Senkrechten zur Scheibenkörperebene auch einen kleinen spitzen Winkel bilden kann, wobei in diesem Zusammenhang zu beachten ist, dass bei der Verwendung des Spritzgussverfahrens für die Herstellung der Scheibenkörper und Kanäle die Kanalwände notwendigerweise einen wenn auch ganz kleinen Winkel mit der Senkrechten zur Scheibenkörperebene bilden müssen, um das im Spritzgussverfahren hergestellte Teil entformen zu können.

Hinsichtlich der Abtrennleistung eines erfindungsgemäßen Abscheiders bringt es erhebliche Vorteile mit sich, wenn die (in Richtung der Rotorachse gemessene) Kanalhöhe wesentlich größer als die Kanalbreite ist und insbesondere ungefähr ein Mehrfaches der Kanalbreite beträgt. Hierzu ist auf Folgendes hinzuweisen: Durch die Coriolis-Kräfte bildet sich in einem Kanal in dem diesen durchströmenden Gas eine Sekundärströmung aus, welche (in einem Schnitt durch den Kanal senkrecht zur Kanalachse) aus mindestens zwei zwischen den die Kanalbreite begrenzenden Kanalwandflächen nebeneinander liegenden Wirbeln besteht; die Auswirkungen dieser Sekundärgeschwindigkeit auf die Abtrennleistung des Abscheiders ist allerdings nur in den seitlichen Randbereichen des Kanals, das heißt in der Nähe der die Kanalbreite begrenzenden Kanalwandflächen, signifikant, da dort die höchsten Strömungsgeschwindigkeiten der Sekundärströmung auftreten. Da sich diese Sekundärgeschwindigkeit negativ auf den Abtrenngrad auswirkt, ist anzustreben, den Kanalquerschnitt so zu gestalten, dass das Verhältnis der Kanalquerschnittsbereiche mit großer Sekundärgeschwindigkeit zum Gesamtquerschnitt des Kanals verhältnismäßig klein ist. Deshalb ist es von Vorteil, wenn die Kanalbreite wesentlich kleiner als die Kanalhöhe ist. Andererseits kann unter bestimmten Umständen ein zu großes Verhältnis von Kanalhöhe zu Kanalbreite zu einer Destabilisierung der Gasströmung im Kanal führen, was eine größere Zahl von Wirbelsystemen zur Folge hat und möglicherweise zu einer Verschlechterung des Abtrenngrades des Abscheiders führt. Deshalb wird empfohlen, das Verhältnis von Kanalhöhe zu Kanalbreite nicht größer zu wählen als 5:1.

Aus dem vorstehend beschriebenen Prinzip des Abscheidemechanismusses des erfindungsgemäßen Abscheiders ergibt sich, dass ein solcher Verlauf bzw. eine solche Krümmung der Kanäle bzw. der Kanalwände anzustreben ist, welcher zur Folge hat, dass in Richtung der Rotorachse gesehen der von der Rotorachse zu einem abzuscheidenden Flüssigkeitströpfchen führende Radialvektor einen möglichst geringen Winkel mit der Flächennormalen des benachbarten Kanalwandabschnitts bildet, das heißt mit der Senkrechten auf den diesem Flüssigkeitströpfchen unmittelbar benachbarten Kanalwandabschnitt, denn ein optimaler Abscheideeffekt ergibt sich mit einer parallel zum Radialvektor verlaufenden Flächennormalen.

Wie bereits erwähnt, kann aus Fertigungsgründen die Kanalbreite nicht beliebig klein bemessen werden. Deshalb sind besonders vorteilhafte Ausführungsformen des erfindungsgemäßen Abscheiders so gestaltet, dass mindestens zwei einander benachbarte Scheibenkörper auf ihren einander zugewandten Seiten mit stegförmigen Wänden versehen sind, die in einer Ansicht in Richtung der Rotorachse einen der Gestalt der Kanäle entsprechenden Verlauf aufweisen, dass ferner die in Richtung der Rotorachse gemessene Höhe dieser Wände mindestens nahezu gleich dem axialen Abstand dieser Scheibenkörper voneinander ist, und dass in Richtung der Rotorachse gesehen mindestens bei mehreren Kanälen die Wände des einen Scheibenkörpers zumindest im Wesentlichen mittig zwischen den Wänden des anderen Scheibenkörpers angeordnet sind. Bei einem solchen Abscheider kann die Breite der von einer Scheibe gebildeten Kanäle ungefähr doppelt so groß sein wie die Breite der im Zwischenraum zwischen zwei einander benachbarten Scheibenkörpern gebildeten Kanäle, so dass Letztere eine geringere Kanalbreite aufweisen können als es die Fertigungstechnik für die Breite der an einer Scheibe ausgebildeten Kanäle zulässt. In diesem Zusammenhang soll aber darauf hingewiesen werden, dass nicht jeder Kanal von Stegen begrenzt sein muss, von denen der eine am einen und der andere am anderen Scheibenkörper vorgesehen ist; vielmehr könnten in einem Zwischenraum zwischen zwei einander benachbarten Scheibenkörpern sowohl Kanäle vorgesehen sein, welche von Stegen nur des einen Scheibenkörpers begrenzt werden, als auch Kanäle, die einerseits von einem Steg des einen Scheibenkörpers und andererseits von einem Steg des anderen Scheibenkörpers begrenzt werden, so dass die einen Kanäle beispielsweise eine ungefähr doppelt so große Kanalbreite aufweisen wie die anderen Kanäle.

Wie bereits erwähnt, ist Gegenstand der Erfindung auch das vorstehend definierte Verfahren, und für dieses gelten alle bezüglich des erfindungsgemäßen Abscheiders gemachten bzw. noch zu machenden Ausführungen entsprechend.

Weitere Merkmale, Einzelheiten und Vorteile der Erfindung ergeben sich aus den beigefügten Ansprüchen sowie der beigefügten zeichnerischen Darstellung einiger bevorzugter Ausführungsformen des erfindungsgemäßen Abscheiders und der nachfolgenden Beschreibung dieser Ausführungsformen; in den Zeichnungen zeigen:
- Fig. 1:: eine schematische Schnittdarstellung einer Ausführungsform des erfindungsgemäßen Abscheiders, wobei die Schnittebene die Rotorachse des Abscheiders enthält;
- Fig. 2:: einen Schnitt nach der Linie 2-2 in Fig. 1 durch eine Ausführungsform mit evolventenförmig verlaufenden Kanälen;
- Fig. 3:: eine stark schematisierte und vereinfachte Darstellung einer Scheibe eines erfindungsgemäßen Abscheiders, und zwar wiederum in einem Schnitt längs einer die Rotorachse enthaltenden Ebene;
- Fig. 4:: eine isometrische Darstellung zweier einander benachbarter Scheiben einer besonders vorteilhaften Ausführungsform des erfindungsgemäßen Abscheiders, wobei nur ein ungefähr 180° umfassender Umfangsabschnitt dieser beiden Scheiben dargestellt wurde, um die Scheibenanordnung auch im Schnitt darstellen zu können, wobei die Schnittebene die Rotorachse enthält oder Letztere parallel zur Schnittebene verläuft;
- Fig. 5:: eine stark vereinfachte Draufsicht auf einen Kanal der in Fig. 2 gezeigten Ausführungsform zwecks Beschreibung des Abscheidemechanismus des erfindungsgemäßen Abscheiders;
- Fig. 6A:: eine der Fig. 2 entsprechende Darstellung einer weiteren Ausführungsform, bei welcher die Kanäle einen kreisbogenförmigen Verlauf aufweisen;
- Fig. 6B:: den in Fig. 6A mit B bezeichneten Bereich in größerem Maßstab, und
- Fig. 7:: die Darstellung einer Archimedischen Spirale, wobei es sich auch um eine stark vereinfachte Draufsicht auf eine zwischen zwei nicht gezeichneten Kanälen verlaufende stegartige Wand im Zwischenraum zwischen zwei einander benachbarten Scheiben des erfindungsgemäßen Abscheiders handeln kann.

Der in Fig. 1 dargestellte Abscheider hat ein mehrteiliges Gehäuse 10 mit einer Umfangswand 12, einer oberen und einer unteren Stirnwand 14 bzw. 16 sowie einem haubenartigen Einlassstutzen 18, einem Auslassstutzen 20 und einem Ablaufstutzen 22, wobei die einzelnen Gehäuseteile vorzugsweise durch Schweißen gas- und flüssigkeitsdicht miteinander verbunden sind. Bei der dargestellten Ausführungsform bildet der Einlassstutzen 18 einen Rohgaseinlass 18a, das heißt einen Einlass für das zu reinigende Gas, der Auslassstutzen 20 bildet einen Reingasauslass 20a für das gereinigte Gas, und der Ablaufstutzen 22 bildet einen Flüssigkeitsauslass 22a für durch den Abscheider aus dem Rohgas abgeschiedene Flüssigkeit.

Die Funktionen der Stutzen 18 und 20 könnten aber auch umgekehrt sein, das heißt der Stutzen 20 könnte einen Rohgaseinlass und der Stutzen 18 einen Reingasauslass bilden, wenn das zu reinigende Gas den noch zu beschreibenden Rotor des Abscheiders nicht radial von innen nach außen, sondern von außen nach innen durchströmen soll.

Im Gehäuse 10 ist eine Antriebswelle 24 um eine Rotorachse 26 drehbar gelagert und ragt nach unten aus dem Gehäuse heraus, so dass sie sich durch einen nicht dargestellten Motor oder anderen Antrieb in Rotation versetzen lässt, und zwar vorzugsweise mit einer Drehzahl im Bereich von 5.000 bis 10.000 Umdrehungen pro Minute. Der Lagerung der Antriebswelle 24 dienen eine obere und eine untere Lagervorrichtung 28, wobei die untere Lagervorrichtung in der unteren Stirnwand 16 untergebracht ist, während die obere Lagervorrichtung über sternförmig angeordnete radiale Stege 28a vom Einlassstutzen 18 gehalten wird - zwischen diesen Stegen 28a kann das zu reinigende Rohgas nach unten strömen.

Das Gehäuse 10 umschließt einen Rotor 30, welcher bei der dargestellten Ausführungsform gebildet wird von fünf flachen und insbesondere ebenen Scheibenkörpern 32a bis 32e, mehreren von der Antriebswelle 24 durchgriffenen Buchsen 34, stegartigen Kanalwänden 36 und sternförmig angeordneten Stegen 38. Jeder der Scheibenkörper 32a bis 32e ist über einen Satz von sternförmig angeordneten und in einer Ebene liegenden Stegen 38 mit einer der Buchsen 34 fest verbunden, und der Einfachheit halber soll für das Folgende angenommen werden, dass die jeweils zwischen zwei einander benachbarten Scheibenkörpern angeordneten Kanalwände 36 mit dem jeweils unteren Scheibenkörper fest verbunden oder an diesen angeformt sind, jedoch einen axialen Zwischenraum zwischen zwei einander benachbarten Scheibenkörpern jeweils vollständig überbrücken, das heißt die axiale Höhe der Kanalwände 36 ist gleich dem axialen Abstand der einander benachbarten Scheibenkörper voneinander. Bei dieser Ausführungsform bildet also der unterste Scheibenkörper 32a zusammen mit den sich von diesem nach oben erstrekckenden Kanalwänden 36 eine Scheibe des Rotors 30, und Gleiches gilt für die Scheibenkörper 32b bis 32d, während der Scheibenkörper 32e nur einen oberen Abschluss des Rotors 30 bildet. Zwischen den Scheibenkörpern 32a bis 32e definieren die Kanalwände 36 also Kanäle 40, auf deren Geometrie später noch näher eingegangen werden wird.

Die Buchsen 34 sind mit der Antriebswelle 24 zumindest verdrehfest, bevorzugt jedoch auch in Richtung der Rotorachse 26 unverschieblich, das heißt dann also fest verbunden, was beispielsweise durch Aufpressen oder Aufschrumpfen der Buchsen 34 auf die Antriebswelle 24 bewirkt werden kann. Sind die Buchsen 34 mit der Antriebswelle 24 nur drehfest verbunden, können, wie in Fig. 1 angedeutet, die Antriebswelle 24 umschließende Schraubenfedern 42 vorgesehen sein, um den Rotor 30 in axialer Richtung auf der Antriebswelle 24 zu sichern.

Auf dem oberen Scheibenkörper 32e und an der oberen Stirnwand 14 ist jeweils eine Ringwand 44 bzw. 46 befestigt, die zur Rotorachse 26 konzentrisch gestaltet und angeordnet ist, wobei die beiden Ringwände 44 und 46 einander in axialer Richtung überlappen und zwischen sich eine Art Labyrinthdichtung bilden sollen, damit das dem Abscheider über den Rohgaseinlass 18a zugeführte, zu reinigende Rohgas nur in einen zentralen Bereich des Rotors 30 eintreten kann, welcher sich zwischen den Buchsen 34 und von den Stegen 38 überbrückten Öffnungen der Scheibenkörper 32a bis 32e befindet.

Wie die Fig. 1 erkennen lässt, umschließt die Umfangswand 12 des Gehäuses 10 einen Ringraum 50 zwischen dem Außenumfang des Rotors 30 und dem Gehäuse 10, und sieht man von den Stutzen 18, 20 und 22 sowie der noch zu beschreibenden Gestalt der Kanalwände 36 sowie der Kanäle 40 ab, ist der Abscheider insgesamt rotationssymmetrisch zur Rotorachse 26 gestaltet.

Der in Fig. 2 dargestellte Schnitt nach der Linie 2-2 in Fig. 1 wurde der Übersichtlichkeit halber etwas vereinfacht und zeigt nur die Gehäuseumfangswand 12, den Ringraum 50, den Scheibenkörper 32d, die Antriebswelle 24 sowie mehrere identisch gestaltete Kanalwände 36 und Kanäle 40.

Bei der in Fig. 2 dargestellten bevorzugten Ausführungsform sind die Kanalwände 36 und damit die Kanäle 40 evolventenförmig gestaltet, was bedeutet, dass die Mittellinie eines zwischen zwei einander benachbarten Kanalwänden befindlichen Kanals 40 einen Abschnitt einer Evolvente bildet; eine solche Mittellinie wurde in Fig. 2 strichpunktiert angedeutet und mit 40a bezeichnet.

Ferner wurde in Fig. 2 die Antriebsdrehrichtung des Rotors 30 durch einen Pfeil R angedeutet, und die Fig. 2 zeigt in einem der Kanäle 40 einen Pfeil GS, welcher den Verlauf eines Teilgasstroms des zu reinigenden Gases in diesem Kanal andeutet. Der Rotor 30 kann aber auch in der entgegengesetzten Richtung angetrieben werden, was jedoch zu einer schlechteren Abtrennleistung des Abscheiders führt.

Wie die Fig. 2 erkennen lässt, besitzt jeder der Kanäle 40 über seine ganze Länge eine konstante Kanalbreite, und bei der bevorzugten Ausführungsform ist die Breite aller Kanäle 40 gleich groß und haben alle Kanalwände 36 dieselbe, überall gleich große Wandstärke.

Eine in Fig. 3 nur schematisch dargestellte Scheibe 60 eines erfindungsgemäßen Abscheiders hat einen ebenen Scheibenkörper 32, an welchen Kanalwände 36 angeformt sind, die zwischen sich Kanäle 40 bilden. Die Rotorachse 26 bildet gleichzeitig die zentrale Achse der Scheibe 60 und damit die zentrale Achse aller Scheibenkörper 32a bis 32e. Es sei noch darauf hingewiesen, dass die sich aus Fig. 3 ergebende Breite der Kanäle 40 nur deshalb unterschiedlich ist, weil ein Schnitt durch die Scheiben bzw. Scheibenkörper längs einer die Rotorachse 26 beinhaltenden Durchmesserebene die Kanäle 40 in radial weiter innen liegenden Bereichen der Scheiben unter einem anderen Winkel schneidet als in radial weiter außen liegenden Bereichen der Kanäle; unter der Breite b der Kanäle 40 ist jedoch der Abstand der beiden einen Kanal begrenzenden Wandflächen zweier Kanalwände 36 zu verstehen, und zwar jeweils gemessen senkrecht zu zwei einander gegenüber liegenden Wandflächenbereichen dieser beiden Kanalwände.

Hingegen ist unter der Höhe der Kanäle 40 der senkrecht zur Ebene des Scheibenkörpers 32 gemessene Überstand der Kanalwände 36 über den Scheibenkörper 32 zu verstehen, und in Fig. 3 wurde die Kanalhöhe mit h bezeichnet. Zumindest bei bevorzugten Ausführungsformen des erfindungsgemäßen Abscheiders ist die Kanalhöhe h wesentlich größer als die Kanalbreite b und beträgt insbesondere ein Mehrfaches, vorzugsweise maximal das Fünffache der Kanalbreite.

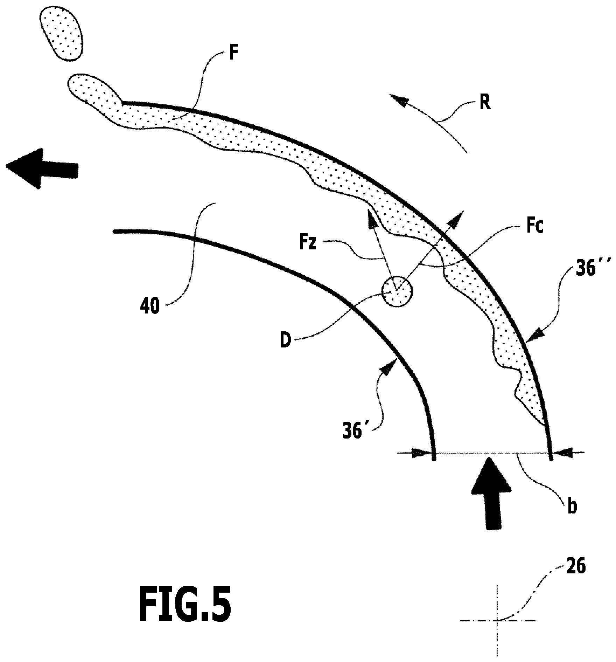

Anhand der Fig. 5 soll nun der Wirkmechanismus des erfindungsgemäßen Abscheiders erläutert werden.

In Fig. 5 wurde ein Kanal 40 mit evolventenförmigem Verlauf stark verkürzt dargestellt; er wird von einer radial weiter innen liegenden Kanalwand 36' und einer radial weiter außen liegenden Kanalwand 36" begrenzt, wobei jede der beiden Kanalwände nur durch eine einzige Linie angedeutet wurde. Die Strömungsrichtung des den Kanal 40 durchströmenden Teilgasstroms des zu reinigenden Gases wurde durch dicke Pfeile angedeutet, die Rotationsrichtung des Rotors wieder durch einen Pfeil R. Bei sich drehendem Rotor wirken auf ein von dem Teilgasstrom mitgeführtes, abzuscheidendes Flüssigkeitströpfchen D die durch einen Pfeil Fz angedeutete Zentrifugalkraft, welche bezüglich der Rotorachse 26 in radialer Richtung verläuft, und die durch einen Pfeil Fc angedeutete Corioliskraft, welche senkrecht sowohl zur Bewegungsrichtung des Flüssigkeitströpfchens D als auch zur Rotationsachse des Bezugssystems, das heißt der Rotorachse 26 orientiert ist. Schon durch die Zentrifugalkraft Fz wird das Flüssigkeitströpfchen D gegen die Kanalwand 36" gedrängt, und dieser Effekt wird durch die Corioliskraft Fc noch verstärkt. Bei einem erfindungsgemäßen Abscheider wirkt also die Kanalwand 36" als Prall- und Abscheidefläche für die von der Gasströmung mitgeführten, abzuscheidenden Flüssigkeitströpfchen, die an der Kanalwand 36" abgeschieden werden und auf dieser einen Flüssigkeitsfilm F oder zumindest größere Flüssigkeitsansammlungen bilden, welche dann aufgrund der Zentrifugalkraft am radial äußeren Ende des Kanals 40 in den Ringraum 50 hinein vom Rotor 30 abgeschleudert werden und zumindest überwiegend gegen die Gehäuseumfangswand 12 prallen, an welcher die abgeschiedene Flüssigkeit aufgrund der Schwerkraft nach unten abfließt und über den Flüssigkeitsauslass 22a das Gehäuse 10 verlässt.

Das Vorstehende gilt nicht nur für evolventenförmig verlaufende Kanäle, sondern auch für Kanäle, welche ungefähr entsprechend einer anderen Spirale oder einem Kreisbogen gekrümmt sind.

Im Gegensatz zu einem Abscheider mit konischen Scheiben werden die aus der Gasströmung abzuscheidenden Flüssigkeitströpfchen also zumindest nahezu ausschließlich an den Kanalwandflächen abgeschieden, welche in einem die Rotorachse 26 enthaltenden Schnitt zumindest nahezu parallel zur Rotorachse orientiert sind und deshalb weit effizientere Prallflächen bilden als bezüglich der Rotorachse konisch verlaufende Prall- und Abscheideflächen.

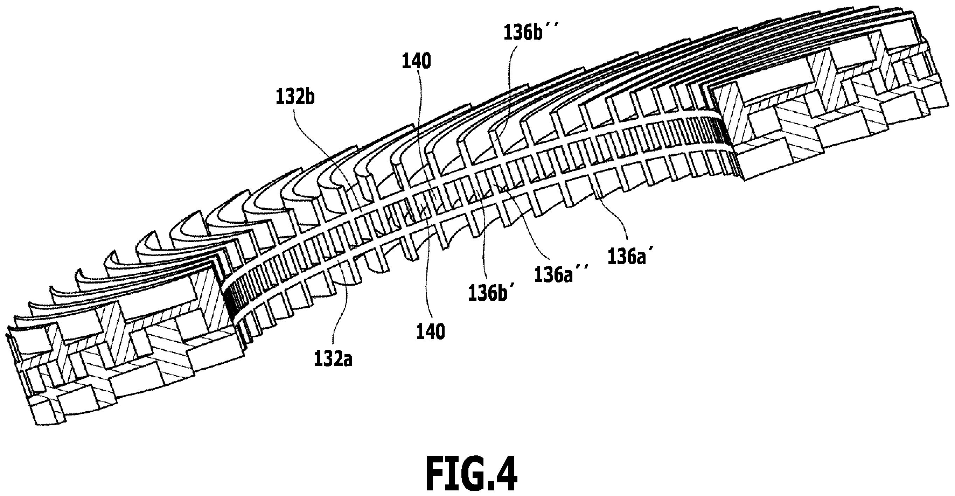

Bei der in Fig. 4 dargestellten, besonders zu bevorzugenden Ausführungsform weisen flache Scheibenkörper 132a und 132b zweier einander benachbarter Scheiben des Rotors eines erfindungsgemäßen Abscheiders auf jeder ihrer beiden Seiten stegartige Kanalwände 136a', 136a" bzw. 136b', 136b" auf, wobei die in den Zwischenraum zwischen den einander benachbarten Scheibenkörpern 132a, 132b hinein vorspringenden Kanalwände 136a", 136b' eine axiale Höhe aufweisen, welche zumindest nahezu gleich dem axialen Abstand der beiden Scheibenkörper 132a, 132b voneinander ist und die Kanalwände des einen Scheibenkörpers mittig (in Umfangsrichtung des Rotors) zwischen zwei einander benachbarten Kanalwänden des anderen Scheibenkörpers liegen. Auf diese Weise entstehen zwischen den Kanalwänden 136a", 136b' Kanäle 140 mit einer Kanalbreite b, welche nur etwas weniger als halb so groß ist wie die Breite der Zwischenräume zwischen einander benachbarten Kanalwänden einer einzigen Scheibe, so dass sich in den Zwischenräumen zwischen zwei einander benachbarten Scheibenkörpern gebildete schmale Kanäle fertigungstechnisch leichter verwirklichen lassen.

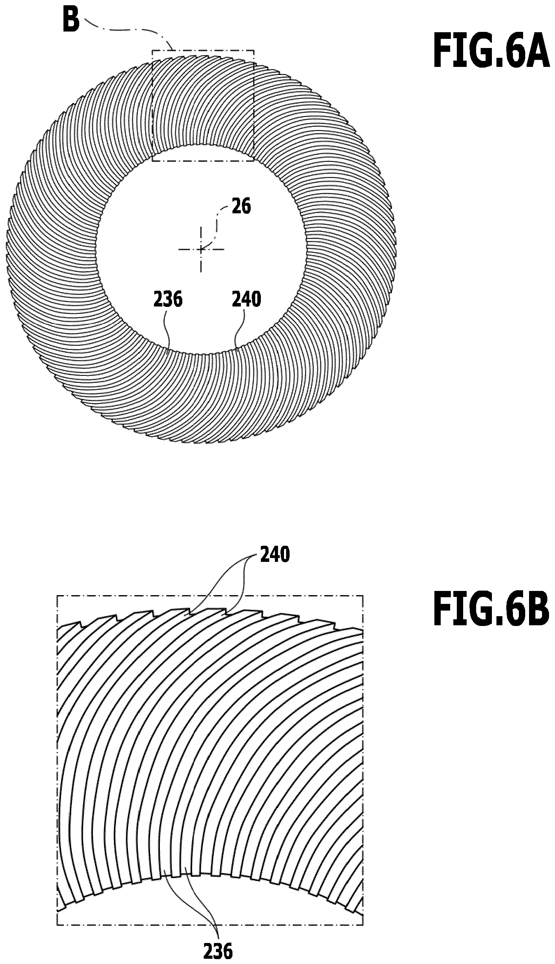

In den Figuren 6A und 6B ist eine weitere Ausführungsform nur stark vereinfacht dargestellt, bei der Kanalwände 236 und zwischen einander benachbarten Kanalwänden gebildete Kanäle 240 einen kreisbogenförmigen Verlauf (in Richtung der Rotorachse 26 gesehen) aufweisen.

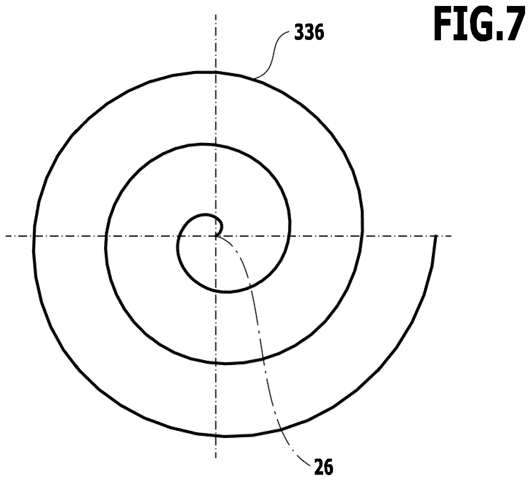

Schließlich zeigt die Fig. 7 eine von einer Kanalwand 336 gebildete Archimedische Spirale, so dass auch zwischen einander benachbarten, in Fig. 7 nicht dargestellten Kanalwänden 336 gebildete Kanäle einen einer Archimedischen Spirale entsprechenden Verlauf aufweisen.

## Patentansprüche

1. Abscheider zum Abscheiden von Flüssigkeitströpfchen aus einem Aerosol, insbesondere Ölabscheider für die Kurbelgehäuse-Entlüftungsgase eines Hubkolben-Verbrennungsmotors, mit einem in einem stationären Gehäuse (10) angeordneten, um eine Rotorachse (26) drehantreibbaren Rotor (30), der mehrere mit der Rotorachse konzentrische, parallel zueinander angeordnete Scheiben (60) aufweist, welche zusammen einen um die Rotorachse drehantreibbaren Scheibenstapel bilden und in Richtung der Rotorachse in insbesondere gleich großen Abständen voneinander angeordnet sind, mit einem Gasströmungspfad zwischen einem Rohgaseinlass (18) des Abscheiders für ein abzuscheidende Flüssigkeitströpfchen mitführendes Gas und einem Reingasauslass (20) des Abscheiders für das von den Flüssigkeitströpfchen mindestens weitgehend befreite Gas, mit einem Flüssigkeitsauslass (22) zum Abführen abgeschiedener Flüssigkeit aus dem Gehäuse sowie mit einem Ringraum (50) zwischen dem Umfang des Rotors und einer diesen umschließenden Umfangswand (12) des Gehäuses, wobei der Flüssigkeitsauslass mit dem Ringraum kommuniziert und einander benachbarte Scheiben zwischen sich jeweils einen mit der Rotorachse konzentrischen, vom Gas zu durchströmenden Zwischenraum bilden, dessen radial äußerer Bereich in den Ringraum mündet, von den Durchlässen Rohgaseinlass und Reingasauslass der eine mit dem Ringraum und der andere mit radial inneren Bereichen der Zwischenräume kommuniziert, zumindest in mehreren der Zwischenräume zwischen zwei einander benachbarten Scheibenkörpern (32) jeweils mehrere einander benachbarte und durch das zu reinigende Gas durchströmbare Kanäle (40) vorgesehen sind, jeder Kanal sich zumindest im Wesentlichen von einem ersten radialen Bereich bis zu einem vom Letzteren radial beabstandeten zweiten radialen Bereich des Zwischenraums erstreckt, und wobei in einer Ansicht in Richtung der Rotorachse jeder Kanal gekrümmt ist,
**dadurch gekennzeichnet, dass** die Scheiben (60) flache Scheibenkörper (32) aufweisen, welche sich in zur Rotorachse senkrechten Ebenen erstrecken, und dass von die Kanalbreite beidseitig begrenzenden Kanalwandflächen (36) die radial äußere eine Prall- und Abscheidefläche für die vom zu reinigenden Gas mitgeführten Flüssigkeitströpfchen bildet.

2. Abscheider nach Anspruch 1, **dadurch gekennzeichnet, dass** sich alle Kanäle zumindest im Wesentlichen von einem radial inneren bis zu einem radial äußeren Bereich des Zwischenraums erstrecken.

3. Abscheider nach Anspruch 1 oder 2, **dadurch gekennzeichnet, dass** jeder der Kanäle stetig gekrümmt ist.

4. Abscheider nach einem der Ansprüche 1 bis 3, **dadurch gekennzeichnet, dass** jeder Kanal, ausgehend von seinem radial inneren Ende, in einer Umfangsrichtung des Rotors abgebogen und derart gekrümmt ist, dass mit zunehmendem radialem Abstand von der Rotorachse die Richtung des Kanals mit dieser Umfangsrichtung des Rotors einen immer kleineren Winkel bildet.

5. Abscheider nach Anspruch 4, **dadurch gekennzeichnet, dass** diese Umfangsrichtung des Rotors dessen Drehrichtung ist.

6. Abscheider nach einem der Ansprüche 1 bis 5, **dadurch gekennzeichnet, dass** in einer Ansicht in Richtung der Rotorachse jeder Kanal durch zwei Kanalwände begrenzt wird und eine zwischen den Kanalwänden verlaufende Mittellinie des Kanals zumindest annähernd mindestens einen Abschnitt einer der folgenden Kurven bildet: Spirale und Kreisbogen.

7. Abscheider nach Anspruch 6, **dadurch gekennzeichnet, dass** die Spirale eine Evolvente oder eine Archimedische Spirale ist.

8. Abscheider nach einem der Ansprüche 1 bis 7, **dadurch gekennzeichnet, dass** in einer Ansicht in Richtung der Rotorachse jeder Kanal entlang des Kanals eine zumindest nahezu konstante Breite aufweist.

9. Abscheider nach Anspruch 8, **dadurch gekennzeichnet, dass** entlang eines Kanals dessen Breite um höchstens ¼ der mittleren Kanalbreite schwankt.

10. Abscheider nacheinem der Ansprüche 1 bis 9, **dadurch gekennzeichnet, dass** in einer Ansicht in Richtung der Rotorachse die Kanalbreite höchstens 15 mm, insbesondere höchstens 4 mm und vorzugsweise höchstens 2 mm beträgt.

11. Abscheider nach einem der Ansprüche 1 bis 10, **dadurch gekennzeichnet, dass** in einer Ansicht in Richtung der Rotorachse die Kanalbreite mindestens 0,1 mm, insbesondere mindestens 0,5 mm und vorzugsweise mindestens 1 mm beträgt.

12. Abscheider nach einem der Ansprüche 1 bis 11, **dadurch gekennzeichnet, dass** in einem Zwischenraum die in Richtung der Rotorachse gemessene Höhe der Kanäle konstant ist.

13. Abscheider nach Anspruch 12, **dadurch gekennzeichnet, dass** die Höhe aller in allen Zwischenräumen vorgesehenen Kanäle gleich groß ist.

14. Abscheider nach einem der Ansprüche 1 bis 13, **dadurch gekennzeichnet, dass** jeder Kanal durch zwei im Wesentlichen parallel zueinander verlaufende Kanalwände begrenzt wird.

15. Abscheider nach Anspruch 14, **dadurch gekennzeichnet, dass** die Kanalwände quer zu einer von einem Scheibenkörper definierten Ebene verlaufen.

16. Abscheider nach einem der Ansprüche 1 bis 15, **dadurch gekennzeichnet, dass** die Kanalhöhe wesentlich größer als die Kanalbreite ist und insbesondere ungefähr ein Mehrfaches der Kanalbreite beträgt.

17. Abscheider nach einem der Ansprüche 1 bis 16, **dadurch gekennzeichnet, dass** die in Richtung der Rotorachse gemessene Höhe der zwischen zwei einander benachbarten Scheibenkörpern vorgesehenen Kanalwandflächen mindestens nahezu gleich dem axialen Abstand dieser Scheibenkörper voneinander ist.

18. Abscheider nach einem der Ansprüche 1 bis 17, **dadurch gekennzeichnet, dass** zwischen einander benachbarten Kanälen jeweils eine Wand mit zumindest im Wesentlichen konstanter Wanddicke verläuft.

19. Abscheider nach einem der Ansprüche 1 bis 18, **dadurch gekennzeichnet, dass** mindestens zwei einander benachbarte Scheibenkörper auf ihren einander zugewandten Seiten mit stegförmigen Wänden versehen sind, die in einer Ansicht in Richtung der Rotorachse einen der Gestalt der Kanäle entsprechenden Verlauf aufweisen, dass die in Richtung der Rotorachse gemessene Höhe dieser Wände mindestens nahezu gleich dem axialen Abstand dieser Scheibenkörper ist, und dass in Richtung der Rotorachse gesehen mindestens bei mehreren Kanälen die Wände des einen Scheibenkörpers zumindest im Wesentlichen mittig zwischen den Wänden des anderen Scheibenkörpers angeordnet sind.

20. Abscheider nach einem der Ansprüche 1 bis 19, **dadurch gekennzeichnet, dass** die Scheiben Kunststoff-Spritzgussteile sind.

21. Abscheider nach einem oder mehreren der Ansprüche 16 bis 20, **dadurch gekennzeichnet, dass** das Verhältnis von Kanalhöhe zu Kanalbreite höchstens 5 beträgt.

22. Verfahren zum Abscheiden von Flüssigkeitströpfchen aus einem Aerosol, insbesondere zur Abscheidung von Öltröpfchen aus Kurbelgehäuse-Entlüftungsgasen eines Hubkolben-Verbrennungsmotors, mittels eines Abscheiders mit einem in einem stationären Gehäuse angeordneten, um eine Rotorachse drehantreibbaren Rotor, der mehrere mit der Rotorachse konzentrische, parallel zueinander und axial voneinander beabstandet angeordnete Scheiben aufweist, die zwischen sich jeweils einen mit der Rotorachse konzentrischen Zwischenraum bilden, **dadurch gekennzeichnet, dass** mehrere von dem zu reinigenden Gas gebildete Teilgasströme längs sich zumindest im Wesentlichen von einem radial inneren bis zu einem radial äußeren Bereich eines Zwischenraums erstreckenden Strömungspfaden simultan zwischen flachen, zur Rotorachse senkrechten Scheibenkörpern der Scheiben durch die Zwischenräume geleitet werden, wobei in einer Ansicht einer Scheibe in Richtung der Rotorachse diese Strömungspfade einander benachbart und gleichsinnig derart gekrümmt sind, dass bei rotierendem Rotor von den Teilgasströmen mitgeführte Flüssigkeitströpfchen aufgrund der auf Letztere einwirkenden Zentrifugal- und Corioliskräfte zumindest überwiegend an Prallflächen abgeschieden werden, welche die Strömungspfade in radialer Richtung nach außen begrenzen.

## Claims

1. Separator for separating liquid droplets from an aerosol, in particular an oil separator for the crankcase ventilation gases of a reciprocating internal combustion engine, comprising a rotor (30) arranged in a stationary housing (10) and capable of being driven in rotation about a rotor axis (26), said rotor (30) comprising a plurality of disks (60) which are concentric with the rotor axis and are arranged parallel to one another, said disks (60) together forming a stack of disks capable of being driven in rotation about the rotor axis and being arranged at in particular equal distances relative to one another in a direction of the rotor axis, a gas flow path between a dirty gas inlet (18) of the separator for a gas entraining liquid droplets to be separated and a clean gas outlet (20) of the separator for the gas cleaned, at least to a large extent, of the liquid droplets, a liquid outlet (22) for discharging separated liquid from the housing, and an annular space (50) between the circumference of the rotor and a circumferential wall (12) of the housing enclosing the rotor, wherein the liquid outlet is in communication with the annular space and disks adjacent to each other in each case form therebetween an interspace that is concentric with the rotor axis and through which the gas is to flow, the radially outer area of said interspace opening into the annular space, wherein one of the dirty gas inlet and the clean gas outlet is in communication with the annular space and the other one of the dirty gas inlet and the clean gas outlet is in communication with radially inner areas of the interspaces, wherein at least in a plurality of the interspaces between two disk bodies (32) adjacent to each other there are provided in each case a plurality of channels (40) adjacent to one another and allowing passage therethrough of the gas to be cleaned, wherein each channel extends at least substantially from a first radial area to a second radial area, radially spaced from the first radial area, of the interspace, and wherein each channel is curved when viewed in a direction of the rotor axis,
**characterized in that** the disks (60) have flat disk bodies (32) which extend in planes perpendicular to the rotor axis and **in that** between channel wall surfaces (36) bounding the channel width on either side, the radially outer one forms an impaction and separation surface for the liquid droplets entrained by the gas to be cleaned.

2. Separator in accordance with claim 1, **characterized in that** all of the channels extend at least substantially from a radially inner area to a radially outer area of the interspace.

3. Separator in accordance with claim 1 or 2, **characterized in that** each of the channels is continuously curved.

4. Separator in accordance with any one of claims 1 to 3, **characterized in that** each channel, starting from its radially inner end, bends in a circumferential direction of the rotor and is curved such that with increasing radial distance from the rotor axis, the direction of the channel forms an increasingly smaller angle with this circumferential direction of the rotor.

5. Separator in accordance with claim 4, **characterized in that** this circumferential direction of the rotor is the direction of rotation thereof.

6. Separator in accordance with any one of claims 1 to 5, **characterized in that**, when viewed in a direction of the rotor axis, each channel is bounded by two channel walls and a centre line of the channel extending between the channel walls forms at least approximately at least a portion of one of a spiral and a circular arc.

7. Separator in accordance with claim 6, **characterized in that** the spiral is an involute or an Archimedean spiral.

8. Separator in accordance with any one of claims 1 to 7, **characterized in that**, when viewed in a direction of the rotor axis, each channel has a width that is at least nearly constant along the channel.

9. Separator in accordance with claim 8, **characterized in that** along the length of a channel, the width thereof does not vary by more than ¼ of the mean channel width.

10. Separator in accordance with any one of claims 1 to 9, **characterized in that**, when viewed in a direction of the rotor axis, the channel width is no greater than 15 mm, in particular no greater than 4 mm and preferably no greater than 2 mm.

11. Separator in accordance with any one of claims 1 to 10, **characterized in that**, when viewed in a direction of the rotor axis, the channel width is at least 0.1 mm, in particular at least 0.5 mm and preferably at least 1 mm.

12. Separator in accordance with any one of claims 1 to 11, **characterized in that** in an interspace, the height of the channels as measured in a direction of the rotor axis is constant.

13. Separator in accordance with claim 12, **characterized in that** the height of all of the channels provided in all of the interspaces is the same size.

14. Separator in accordance with any one of claims 1 to 13, **characterized in that** each channel is bounded by two channel walls that are at least substantially parallel to each other.

15. Separator in accordance with claim 14, **characterized in that** the channel walls extend along a course transverse to a plane defined by a disk body.

16. Separator in accordance with any one of claims 1 to 15, **characterized in that** the channel height is substantially larger than the channel width and is in particular approximately a multiple of the channel width.

17. Separator in accordance with any one of claims 1 to 16, **characterized in that** the height, as measured in a direction of the rotor axis, of the channel wall surfaces provided between two disk bodies adjacent to one another is at least nearly equal to the axial distance of these disk bodies from each other.

18. Separator in accordance with any one of claims 1 to 17, **characterized in that** channels adjacent to one another have in each case a wall of at least substantially constant wall thickness extending therebetween.

19. Separator in accordance with any one of claims 1 to 18, **characterized in that** at least two disk bodies adjacent to each other are provided, on the sides thereof facing each other, with web-shaped walls which, when viewed in a direction of the rotor axis, extend along a course corresponding to the shape of the channels, **in that** the height of these walls, measured in a direction of the rotor axis, is at least nearly equal to the axial distance of these disk bodies from each other, and **in that**, when seen in a direction of the rotor axis, in at least a plurality of channels the walls of the one disk body are at least substantially centrally arranged between the walls of the other disk body.

20. Separator in accordance with any one of claims 1 to 19, **characterized in that** the disks are injection-moulded plastic parts.

21. Separator in accordance with one or more of claims 16 to 20, **characterized in that** the ratio of channel height to channel width is no greater than 5.

22. Method for separating liquid droplets from an aerosol, in particular for separating oil droplets from crankcase ventilation gases of a reciprocating internal combustion engine, by way of a separator comprising a rotor arranged in a stationary housing and capable of being driven in rotation about a rotor axis, said rotor comprising a plurality of disks which are concentric with the rotor axis and are arranged parallel to and axially spaced apart from one another, said disks in each case forming therebetween an interspace concentric with the rotor axis, **characterized in that** a plurality of partial gas streams formed by the gas to be cleaned are directed along flow paths extending at least substantially from a radially inner to a radially outer area of an interspace and are flowed simultaneously between flat disk bodies of the disks perpendicular to the rotor axis through the interspaces, wherein in a view of a disk in a direction of the rotor axis said flow paths are adjacent to one another and are curved in the same sense such that when the rotor rotates, liquid droplets entrained in the partial gas streams are, by the centrifugal and Coriolis forces acting upon them, at least for the most part separated out on impaction surfaces which bound the flow paths outwardly in a radial direction.

## Revendications

1. Séparateur servant à séparer des gouttelettes de liquide d'un aérosol, en particulier séparateur d'huile pour les gaz d'aération de carter de vilebrequin d'un moteur à combustion interne à pistons alternatifs, avec un rotor (30) disposé dans un carter (10) stationnaire, pouvant être entraîné en rotation autour d'un axe de rotor (26), qui présente plusieurs disques (60) concentriques avec l'axe de rotor, disposés de manière parallèle les uns par rapport aux autres, lesquels forment conjointement une pile de disques pouvant être entraînée en rotation autour de l'axe de rotor et sont disposés en direction de l'axe de rotor à des distances les uns des autres en particulier égales, avec un trajet d'écoulement de gaz entre une entrée de gaz brut (18) du séparateur pour un gaz entraînant des gouttelettes de liquide à séparer et une sortie de gaz épuré (20) du séparateur pour le gaz au moins largement dépourvu des gouttelettes de liquide, avec une sortie de liquide (22) servant à évacuer un liquide séparé hors du carter et avec un espace annulaire (50) entre la périphérie du rotor et une paroi périphérique (12), entourant celle-ci, du carter, dans lequel la sortie de liquide communique avec l'espace annulaire et des disques adjacents les uns aux autres forment entre eux respectivement un espace intermédiaire concentrique avec l'axe de rotor, devant être traversé par le gaz, dont la zone radialement extérieure débouche dans l'espace annulaire, parmi les passages que sont l'entrée de gaz brut et la sortie de gaz épuré, l'une communique avec l'espace annulaire et l'autre communique avec des zones radialement intérieures des espaces intermédiaires, respectivement plusieurs canaux (40) adjacents les uns aux autres et pouvant être traversés par le gaz à nettoyer sont prévus au moins dans plusieurs des espaces intermédiaires entre deux corps de disque (32) adjacents les uns aux autres, chaque canal s'étend au moins sensiblement depuis une première zone radiale jusqu'à une deuxième zone radiale, tenue à distance radialement de celle-ci, de l'espace intermédiaire, et dans lequel chaque canal est incurvé dans une vue en direction de l'axe de rotor,
**caractérisé en ce que** les disques (60) présentent des corps de disque (32) plats, lesquels s'étendent dans des plans perpendiculaires par rapport à l'axe de rotor, et que la surface radialement extérieure des surfaces de paroi de canal (36) délimitant de part et d'autre la largeur de canal forme la surface d'impact et de séparation pour les gouttelettes de liquide entraînées par le gaz à épurer.

2. Séparateur selon la revendication 1, **caractérisé en ce que** tous les canaux s'étendent au moins sensiblement depuis une zone radialement intérieure vers une zone radialement extérieure de l'espace intermédiaire.

3. Séparateur selon la revendication 1 ou 2, **caractérisé en ce que** chacun des canaux est en permanence incurvé.

4. Séparateur selon l'une quelconque des revendications 1 à 3, **caractérisé en ce que** chaque canal, en partant de son extrémité radialement intérieure, est cintré dans une direction périphérique du rotor et est incurvé de telle manière que la direction du canal avec ladite direction périphérique du rotor forme un angle sans cesse plus petit au fur et à mesurer que la distance par rapport à l'axe de rotor augmente.

5. Séparateur selon la revendication 4, **caractérisé en ce que** ladite direction périphérique du rotor est sa direction de rotation.

6. Séparateur selon l'une quelconque des revendications 1 à 5, **caractérisé en ce que** dans une vue en direction de l'axe de rotor, chaque canal est délimité par deux parois de canal et une ligne médiane, s'étendant entre les parois de canal, du canal forme au moins approximativement une section d'une des courbes suivantes : spirale et arc de cercle.

7. Séparateur selon la revendication 6, **caractérisé en ce que** la spirale est une courbe développante ou une spirale d'Archimède.

8. Séparateur selon l'une quelconque des revendications 1 à 7, **caractérisé en ce que** dans une vue en direction de l'axe de rotor, chaque canal présente le long du canal une largeur au moins quasiment constante.

9. Séparateur selon la revendication 8, **caractérisé en ce que** le long d'un canal, sa largeur fluctue de maximum ¼ de la largeur de canal moyenne.

10. Séparateur selon l'une quelconque des revendications 1 à 9, **caractérisé en ce que** dans une vue en direction de l'axe de rotor, la largeur de canal est au maximum de 15 mm, en particulier au maximum de 4 mm et de préférence au maximum de 2 mm.

11. Séparateur selon l'une quelconque des revendications 1 à 10, **caractérisé en ce que** dans une vue en direction de l'axe de rotor, la largeur de canal est d'au moins 0,1 mm, en particulier d'au moins 0,5 mm et de préférence d'au moins 1 mm.

12. Séparateur selon l'une quelconque des revendications 1 à 11, **caractérisé en ce que** la hauteur des canaux mesurée en direction de l'axe de rotor est constante dans un espace intermédiaire.

13. Séparateur selon la revendication 12, **caractérisé en ce que** la hauteur de tous les canaux prévus dans tous les espaces intermédiaires est égale.

14. Séparateur selon l'une quelconque des revendications 1 à 13, **caractérisé en ce que** chaque canal est délimité par deux parois de canal s'étendant sensiblement de manière parallèle l'une par rapport à l'autre.

15. Séparateur selon la revendication 14, **caractérisé en ce que** les parois de canal s'étendent de manière transversale par rapport à un plan défini par un corps de disque.

16. Séparateur selon l'une quelconque des revendications 1 à 15, **caractérisé en ce que** la hauteur de canal est sensiblement plus grande que la largeur de canal et est en particulier approximativement un multiple de la largeur de canal.

17. Séparateur selon l'une quelconque des revendications 1 à 16, **caractérisé en ce que** la hauteur mesurée en direction de l'axe de rotor des surfaces de paroi de canal prévues entre deux corps de disque adjacents l'un à l'autre est au moins quasiment égale à la distance axiale desdits corps de disque.

18. Séparateur selon l'une quelconque des revendications 1 à 17, **caractérisé en ce que** respectivement une paroi avec au moins une épaisseur de paroi sensiblement constante s'étend entre des canaux adjacents les uns aux autres.

19. Séparateur selon l'une quelconque des revendications 1 à 18, **caractérisé en ce qu'**au moins deux corps de disque adjacents l'un à l'autre sont pourvus sur leurs côtés tournés les uns vers les autres de parois en forme de nervure, qui présentent dans une vue en direction de l'axe de rotor un profil correspondant à la forme des canaux, que la hauteur, mesurée dans la direction de l'axe de rotor, desdites parois est au moins quasiment égale à la distance axiale desdits corps de disque, que vues en direction de l'axe de rotor, les parois d'un corps de disque sont disposées au moins sensiblement au centre entre les parois de l'autre corps de disque au moins pour plusieurs canaux.

20. Séparateur selon l'une quelconque des revendications 1 à 19, **caractérisé en ce que** les disques sont des pièces de moulage par injection en matière plastique.

21. Séparateur selon l'une quelconque ou plusieurs des revendications 16 à 20, **caractérisé en ce que** le rapport entre hauteur de canal et largeur de canal est au maximum de 5.

22. Procédé servant à séparer des gouttelettes de liquide d'un aérosol, en particulier servant à séparer des gouttelettes d'huile de gaz d'aération de carter de vilebrequin d'un moteur à combustion interne à pistons alternatifs, au moyen d'un séparateur avec un rotor disposé dans un carter stationnaire, pouvant être entraîné en rotation autour d'un axe de rotor, qui présente plusieurs disques concentriques avec l'axe de rotor, disposés de manière parallèle les uns par rapport aux autres et de manière espacée axialement les uns des autres, lesquels forment conjointement entre eux respectivement un espace intermédiaire concentrique avec l'axe de rotor, **caractérisé en ce que** plusieurs flux de gaz partiels formés par le gaz à épurer sont acheminés le long de trajets d'écoulement s'étendant au moins sensiblement depuis une zone radialement intérieure vers une zone radialement extérieure d'un espace intermédiaire simultanément entre des corps de disque, plats, perpendiculaires par rapport à l'axe de rotor, des disques à travers les espaces intermédiaires, dans lequel dans une vue d'un disque en direction de l'axe de rotor, lesdits trajets d'écoulement sont adjacente les uns aux autres et incurvés dans le même sens de telle manière que dans le cas d'un rotor en rotation des gouttelettes de liquide entraînées avec des flux de gaz partiels sont séparées du fait des forces centrifuges et de Coriolis agissant sur ces dernières au moins majoritairement sur des surfaces d'impact, lesquelles délimitent dans une direction radiale vers l'extérieur les trajets d'écoulement.
